## Europäisches Patentamt
## European Patent Office
## Office européen des brevets

(19)

(11) Publication number: **0 159 696**
**A2**

(12)

# EUROPEAN PATENT APPLICATION

(21) Application number: **85104931.2**

(22) Date of filing: **23.04.85**

(51) Int. Cl.⁴: **B 01 J 20/20,** B 01 J 20/26, B 01 J 20/28

(30) Priority: **25.04.84 US 603669**

(43) Date of publication of application: **30.10.85 Bulletin 85/44**

(84) Designated Contracting States: **CH DE FR IT LI NL SE**

(71) Applicant: **PALL CORPORATION, 30 Sea Cliff Avenue, Glen Cove New York 11542 (US)**

(72) Inventor: **Degen, Peter John, 24 Glades Way, Huntington New York 11743 (US)**
Inventor: **Gsell, Thomas Charles, 9 Grace Lane, Levittown New York 11756 (US)**

(74) Representative: **Brehm, Hans-Peter, Dr. Dipl.-Chem. et al, Albert-Rosshaupter-Strasse 65, D-8000 München 70 (DE)**

(54) Self-supporting structures containing immobilized carbon particles and method for forming same.

(57) A process for immobilizing adsorbent carbon particles and forming a self-supporting structure of high compressive strength therefrom is described in which the self-supporting structure substantially eliminates the formation of carbon fines while retaining the adsorption characteristics of the carbon particles. The process for immobilizing the adsorbent carbon particles in the self-supporting structure comprises the steps of:

(a) mixing carbon particles, a major portion of which has particle sizes in the range of from about 200 to about 2,000 microns, with a powdered polymeric binding material, preferably a thermoplastic material having a solid-liquid transition stage, in an amount of about 5 to about 20 percent by weight, based on the weight of the total mixture, a major portion of the particles of the polymeric binding material having particle sizes in the range of about 8 to about 30 microns, to form a mixture of the carbon particles partially coated with the polymeric binding material;

(b) placing the mixture in a container of a desired shape; and

(c) applying a pressure of up to about 28 bar while the mixture is at an elevated temperature, this temperature being near the solid-liquid transition stage (when the polymeric binding material is a thermoplastic material), thereby forming the structure and immobilizing the particles.

ACTORUM AG

0159696

### SELF-SUPPORTING STRUCTURES CONTAINING
### IMMOBILIZED CARBON PARTICLES
### AND METHOD FOR FORMING SAME

Technical Field:

The present invention relates to filter structures in which adsorbent carbon particles are immobilized with a polymeric binding agent and to a process for forming the structures. More particularly, the present invention relates to a process for forming a self-supporting filter structure in which adsorbent carbon particles, including carbon fines, are immobilized in a structure formed from a polymeric binding agent while the adsorption characteristics of the carbon particles are retained.

Background Art:

Adsorbent carbon, particularly activated carbon, is used extensively for a variety of purposes, many of which depend to a considerable extent on the large surface area and surface activity of the carbon particles. This adsorbent property of carbon is the basis for its use in many filter applications, including those for filtering and removal of certain fluids, particularly gases. The ability of adsorbent, particularly activated, carbon particles to

0159696

remove impurities from fluids, generally, and gases, such as air, in particular, has led to their extensive use in filters of varying types, including air conditioning filters, heating plant filters, gas masks and the like. Activated carbon, the material preferred for use in gas masks and the like, has an extremely high porosity and is characterized primarily by a very large specific surface area.

Although the manner in which a filter made of adsorbent, or activated, carbon retains substances which come in contact with the carbon particles is not fully understood, it is believed that retention occurs largely by means of physical sorption, chemical sorption and catalytic reactions. Specificity and efficiency of retention of certain substances has been shown to be increased by treatment of carbon particles with different metal compounds, such as in a process known as Whetlerizing. This is particularly effective in articles intended to be used in gas masks and the like. Some of the metal compounds employed for such purposes, although having relatively low vapor pressures, are potentially toxic if inhaled or ingested. Some of these compounds, such as chromium salts, have been shown to be carcinogenic. In many instances, adsorbent carbon powder which has been treated with such metal compounds for use in gas masks and the like, may contain carbon fines either as a result of natural particle size distribution or from fines generation from handling during processing. When gas masks employing such treated adsorbent carbon powder are manufactured, there exists a potential danger of the metal salt impregnated carbon fines passing through the filter and being absorbed or inhaled by a person wearing such a gas mask. Thus, the wearer may avoid one health hazard

-3-

0159696

only to face another potential health hazard. With such fines present in the filter of a gas mask, there is also the problem of inhalation of toxic material or toxins adsorbed by the fines in the filtration process.

Disclosure Of Invention:

The present invention provides structures and methods of producing such structures in which carbon fines already existing among carbon particles are immobilized within the structures and any tendency to form carbon fines is reduced or substantially eliminated. The present invention is directed to self-supporting structures in which adsorbent carbon particles, including carbon fines, are immobilized within a polymeric matrix. The structures of the present invention substantially retain the inherent adsorption characteristics of the carbon particles with minimal increase in pressure drop across the structures as compared to similar cross-sections of non-immobilized adsorbent carbon particles. The self-supporting structures also provide resistance to compressive or deformation forces, lacking in non-immobilized carbon particles, and of sufficient magnitude such that the structures may be easily handled and transported without substantial loss of structural integrity or the production of fine carbon particles due to particle-particle abrasion. Thus, the self-supporting immobilized adsorbent carbon structures of the present invention are quite suitable for filtering a variety of gaseous and liquid materials and have potential application for numerous purposes, particularly as filter elements in cannisters of gas masks.

While not wishing to be bound by any particular theory, it is believed that the highly desirable properties of the structures of the present invention result from an interaction of the various particles, which begins with an attraction that is formed between the carbon particles and, in particular, the carbon fines, and the polymeric binder particles during the dispersing process. As a result of the attraction between the carbon and polymeric particles, the carbon fines are "scavenged" as aggregates with the polymeric particles. The fines subsequently become trapped or immobilized when the binder particles are softened during a heating step. The fines themselves appear to contribute an "adhesive" effect in binding one carbon particle to another. As a consequence, an increase in the compressive strength of the structure is provided while the adsorbent carbon fines are retained.

The present invention is also directed to a process for immobilizing adsorbent carbon particles, including scavenging fines thereof, and forming a self-supporting structure therefrom having the properties described above, namely, the substantial elimination of mobility and loss, as well as further formation, of carbon fines while providing a structure with a relatively low pressure drop across the structure and one that substantially retains the adsorption characteristics of carbon particles themselves. This process comprises the steps of:

(a) mixing carbon particles, a major portion of which has particle sizes in the range of from about 200 to about 2,000 microns, with a powdered polymeric binding material in an amount of about 5 to about 20 percent by weight, based on the total weight of the mixture, a major portion of the polymeric binding material having particle sizes in the range of from about 8 to about 30 microns, thereby forming a mixture of the carbon particles coated with the polymeric binding material;

(b) placing the mixture in a container of the desired shape; and

(c) applying a pressure of up to about 28 bar (400 psi) while the mixture is at a temperature corresponding to the solid-liquid transition stage of the polymeric binding material, resulting, when the polymeric binding material has cooled, in the self-supporting structure in which the adsorbent carbon particles are immobilized.

The invention described herein also contemplates a self-supporting structure with a low pressure drop and high compressive strength which is formed by the process described immediately above and comprises:

- adsorbent carbon particles, a major portion of which has particle sizes in the range of from about 200 to about 2,000 microns;

- about 0.5 percent to about 5 percent by weight, based on the weight of the adsorbent carbon particles, of carbon fines having particle sizes in the range of about 0.1 to about 50 microns; and

- about 5 to about 20 percent by weight of a polymeric binding material, the percentage based on the total weight of the mixture of polymeric binding material, carbon particles and carbon fines.

<u>Best Modes for Carrying Out The Invention:</u>

<u>Adsorbent Carbon:</u>

Although any form of adsorbent carbon is suitable for the present invention, particularly preferred is activated carbon. By activated carbon is generally meant a form of carbon which is characterized by very high adsorptive capacity for gases, typically in the form of charcoal, bone charcoal, sugar charcoal or very finely divided carbon derived from petroleum or vegetable matter. These materials are generally produced by the destructive distillation of wood, peat, lignite, bones, shells, etcetera. The carbonaceous matter is subsequently activated at an elevated temperature with steam or carbon dioxide, which brings about the porous nature of the carbon.

A major portion should have particle sizes in the range of about 200 to about 2,000 microns or such as passing a mesh size of from 2.8 to 0.18 mm (about 80 to about 7 mesh) although it is generally preferred to use a narrower cut within this range, such as passing a mesh size of from 1.4 to 0.54 mm (12 x 30 mesh) or carbon particles such as passing a mesh size of from 0.84 to 0.30 mm (20 x 50 mesh). With proper sieving of the carbon, the major portion generally constitutes 95 to 99.5 percent of the material. Most preferably, the average particle size of the carbon particles is about 1,000 to about 1,200 microns. If the average particle size is significantly larger than 2,000 microns, then a lesser amount of the polymeric binding or binder material is preferably used. However, there is a general correlation between the amount of binder used and the amount of fines which can be bound by the structure, i.e., reducing the amount of binder may reduce the quantity of fines wich may be immobilized. If the major portion of particle sizes of the carbon is significantly smaller than the lower end of the range, more binder is required because of greater surface area and the risk of "blinding" or decreasing the porosity of the sorbent occurs. The bulk density of the carbon is generally in the range of about 0.45 to about 0.62 $g/cm^3$, preferably about 0.48 $g/cm^3$. When a carbon having this latter value is used, the pressure employed in the compressive step frequently effects an increase in the bulk density from the preferred value, commonly to a value of about 0.52 to about 0.57 $g/cm^3$.

A preferred form of the carbon employed in the present invention is available as an activated carbon from Calgon Corporation, a subsidiary of Merck and Company, designated as BPL 12 X 30 mesh and having an average particle size of about 1,200 microns.

Prior to mixing with the thermoplastic material, the adsorbent carbon particles may be treated with metal compounds or metal complexes, such as copper, chromium and silver compounds, and complexes of such metals with compounds such as ammonia, in any conventional manner, as for example, by a process known as "Whetlerizing". Examples of such compounds include, but are not limited to, those effective in removing poisonous contaminants, particularly cyanogen chloride, from air, such as $NH_4HCrO_4$, $CuOHNH_4$-$CrO_4$, $Cu_4(OH)_6CrO_4 \cdot xNH_3 \cdot yH_2O$ (brochantite chromate) and those disclosed in U. S. Patents 2,920,050 and 2,920,051, which are incorporated herein by reference. Commercially available carbon treated with metallic compounds, such as Calgon ASC Whetlerized carbon, is suitable in the present invention if such material generally has the other properties of a suitable adsorbent carbon.

## Polymeric Binding Material:

As used herein, "polymeric binding material" refers to either a thermoplastic or thermosetting polymeric material, preferably synthetic, which is capable of being shaped under the process conditions of the present invention.

The term "thermoplastic material" describes the preferred polymeric binding material of the present invention and generally refers to any polymeric material having thermoplastic properties and may include any synthetic or semi-synthetic condensation or polymerization product. Preferably, the thermoplastic material is a homopolymer or copolymer of a polyolefin. Most preferable are polyethylene and polypropylene, the former being particularly preferred.

Other thermoplastic materials include polystyrene, polycarbonates, polyurethanes, phenoxy resins, vinyl resins derived from monomers such as vinyl chloride, vinyl acetate, vinylidine chloride, etcetera, including polyvinyl chloride, copolymers of vinylchloride with one or more of acrylonitrile, methacrylonitrile, vinylidine chloride, alkyl acrylate, alkyl methacrylate, alkyl maleate, alkyl fumarate, etcetera.

In some instances, to provide creep resistance, a thermosetting material may be preferred as the polymeric binding material. Suitable for this use are the type of cross-linked polyethylenes used as cable coatings, such as materials formed from blends of polyethylene with peroxide cross-linking agents, such as, for example, benzoyl or dicumyl peroxide present in catalytic amounts. Other examples include those materials in which a prepolymer is reacted with a cross-linking agent to form the product and includes polyurethanes of the type in which a "blocked" diisocyanate is reacted initially with a difunctional compound, such as a diol, to form the prepolymer which in turn is reacted with a trifunctional compound, such as a triol, to form, at the appropriate temperature, the cross-linked polymer. These thermosetting materials, which generally cross-link at temperatures between 100-200 degrees C, exhibit properties similar to the preferred crystalline thermoplastic materials discussed below.

The selection of polymeric binding material depends to some extent on the properties sought in the self-supporting structure which is formed in part from the binding material. That is, some of the mechanical properties of the immobilized carbon structure are determined by the physical properties of the binding material. If, for instance, a structure which flexes or which resists fracturing is desired, a thermoplastic powder should be used which is not fully crystalline or below its glass transition temperature at the temperature at which the article is used. Conversely, a rigid structure requires a more crystalline thermoplastic or thermosetting material.

A requirement of any material selected as the polymeric binding material for use in the present invention is that it have a sufficiently high viscosity at the processing temperature so as not to flow and "blind" or reduce the porosity of the active carbon, which porosity is necessary for effective adsorption. As described below, the heating step is conducted in such a manner as to cause the polymeric binding material to begin to soften so that the particles lose their original shape and become slightly tacky. The material should not, however, have a viscosity at the processing temperature such that it flows and blinding results.

A major portion of the particles of the polymeric binding material should have average particle sizes in the range of about 8 to about 30 microns. When the particle sizes are significantly larger than the upper limit of this range, the powder demonstrates a tendency to settle and a higher weight percentage is required. This may result, in some instances, in blinding. If particle sizes significantly smaller are used, there is also some tendency for blinding to occur.

When thermoplastic materials are used in the present invention, particularly preferred are polyethylene powders known commercially as Microthene FN500, FN510 and FN524, available from USI Chemicals. These powdered polyethylene powders differ somewhat from one another in density and Vicat softening point.

In addition, when a somewhat more flexible structure is desired, up to 10 percent of a second ethylenically unsaturated material, such as vinyl acetate, may be copolymerized with the ethylene to provide an amorphous thermoplastic binding material. A copolymer of this type exhibits less of a tendency to blind and also imparts some energy or shock absorbency properties to the immobilized carbon structure, thereby reducing the tendency of the structure to fracture when handled with less caution than that required by some of the structures using more crystalline homopolymers. A suitable material of this type comprising 9 percent vinyl acetate compolymerized with polyethylene is available from USI Chemicals as Microthene FN532.

The polymeric binding material is present suitably in an amount of about 5 to about 20 percent by weight, preferably 5 to about 9 percent by weight,

0159696

and most preferably about 7 percent by weight, all percentages based on the weight of the mixture of polymeric binding material and carbon particles.

A preferred thermoplastic material is a low density polyethylene which is somewhat crystalline and has a Vicat softening point of about 90 degrees C. This material provides a somewhat rigid structure.

Self-Supporting Immobilized Carbon Structure:

To form the self-supporting immobilized carbon structure of the present invention, adsorbent carbon particles are mixed with an appropriate amount, as indicated above, of polymeric binding material in any suitable manner. Mixing is conducted until uniformity is attained. It is usually unnecessary to use any particular precautions or undue care to avoid crushing the carbon during blending, which increases thereby the fines content, since the polymeric binding agent is capable of scavenging carbon fines. Some care should be employed, however, when the carbon particles already contain a large amount of fines, i.e., near or over 5 percent by weight based on the weight of adsorbent carbon particles. Once mixing has been completed and a substantially uniform mixture has been obtained, a portion of the mixture is transferred to a mold having the particular volume and shape desired.

Heat and pressure are then applied to the contents of the mold to provide an immobilized carbon structure, to impart compressive strength to the structure and, in some instances, indirectly, to reduce the potential for flaking of the structure and render it somewhat flexible. To immobilize the car-

0159696

bon particles, particularly carbon fines, the particles should be effectively bonded to one another by, or secured within, a matrix of polymeric binding material. Effective interparticle bonding and trapping of carbon fines occurs and the consequent increase in strength of the structure with minimal reduction of adsorptive properties or increase in pressure drop results when the carbon particles and fines are uniformly distributed in the self-supporting structure without blinding of carbon particles. This does not mean that each carbon particle or fine is completely enveloped in the polymeric binding material. On the contrary, it is preferred that each particle merely be held within the polymeric matrix and contact between adjacent carbon particles or fines is preferred. This may be accomplished by raising the temperature of the mixture to what has been referred to heretofore as the processing temperature to produce a suitable consistency in the polymeric binding material. Use of the proper temperature for a particular polymeric binding material causes that material to be softened and form a semi-solid or semi-liquid consistency. That is, the material is softened to the extent that no well defined particles exist which have the physical attributes of a solid yet the material does not flow as does a liquid. At this temperature or stage, termed herein as the "solid-liquid transition stage", which is about 30 to about 50 degrees Celsius (about 50 to about 90 degrees Fahrenheit) above the Vicat softening point, the polymeric binding material which existed at a lower temperature as separate particles merge to form a unitary matrix with an increased tackiness. This tackiness, probably resulting from increased mobility of the molecular chains of the molecules, provides improved inter-

0159696

particle carbon adhesion. The solid-liquid transition stage is not to be confused with a melting point in which solid and liquid phases exist in dynamic equilibrium with one another. At the solid-liquid transition stage, the polymeric binding material may be thought to be in a hybrid state between solid and liquid states. When at this stage, the mixture of thermoplastic material and carbon particles may be compressed sufficiently by application of pressure to decrease the distance between carbon particles, or increase the number of contact points between adjacent particles and increase interparticle bonding, providing thereby increased compressive strength with retention of adsorptive properties. The solid-liquid transition stage for a polymeric binding material is not as sharply defined as is the melting point of a pure crystalline material, and, in some instances, the temperature range of this stage is somewhat broad. However, it is still undesirable to use temperatures in the present process which are much above the temperature range of the solid-liquid transition stage since the polymeric binding material then exhibits the characteristics of a liquid in that it tends to readily flow. This is to be avoided since blinding of the pores of the carbon may occur and formation of a mass or block of coated carbon particles in which the adsorption and gas permeability characteristics have been reduced or lost may also result.

The heat required to raise the temperature of the mixture of polymeric binding material powder and carbon to the solid-liquid transition stage may be supplied by any conventional equipment, such as, for example, a forced hot air or convection oven, a heat jacketed mold, an infrared heater, or a heated roller

0159696

or rollers. Depending on the apparatus used for heating the sample and the volume of the mold, heating to the solid-liquid transition stage may take from about 10 minutes to over an hour.

The compressive or crush strength of the self-supporting structures varies directly with the magnitude of the pressure applied during the forming step at the solid-liquid transition stage. Likewise, the pressure drop across the self-supporting structure varies proportionately with the magnitude of pressure applied to the carbon/polymeric binding material mixture during formation of the structure. However, although the pressure drop does increase somewhat within the suitable pressure range described herein, it increases significantly above this range, likely due to crushing of carbon and formation of additional fines.

Pressure may be supplied to the mold by placement between two pressure rollers (calendering), appropriate placement of a weight, or hydraulic means, such as by use of a piston, or by any other device and method known for application of pressure to a mold.

Although the compressive pressure may be applied before or during elevation of the temperature to the solid-liquid transition stage, it is preferred to raise the temperature to, or very close to, the solid-liquid transition stage where the thermoplastic material is soft and about to flow prior to application of pressure. Once the mixture is raised to the temperature of the solid-liquid transition stage and thermal equilibrium is established, pressure need be applied for only a brief period of time, i.e., less than 5 minutes being adequate and 1 to 2 minutes generally being sufficient.

Pressures in the range of up to the crush strength of the carbon, which is about 28 bar (about 400 psi), are suitable and pressures, from a practical perspective, from about 0.021 to about 0.70 bar (0.3 to about 10 psi) are preferred. That is, generally the compressive strength of the self-supporting immobilized structure is directly related to the pressure applied at the solid-liquid transition stage. For most purposes, very high compressive strengths are not required. Thus, by using lower pressures during the process, simpler equipment may be employed and a self-supporting structure having adequate strength, particularly compressive or crush strength, sufficient to permit ease of handling and transport, as well as minimum pressure drop across the structure and maximum adsorption characteristics, is achieved while substantially eliminating the formation of fines and retaining or immobilizing existing fines.

While the invention is susceptible to various modifications and alternative forms, certain specific embodiments thereof are described in the examples set forth below. It should be understood, however, that these examples are not intended to limit the invention to the particular forms disclosed but, on the contrary, the intention is to cover all modifications, equivalents and alternatives falling within the spirit and scope of the invention.

Examples:

General Method For Preparation Of Examples 1 To 8:

Examples 1 to 8 were prepared by essentially the same procedure and specific differences in conditions or materials are noted below.

Portions of approximately 1,200 grams of Calgon BPL, carbon having an average particle size of 1.2 mm, were weighed and combined, individually, in a 4.5 liter, wide-mouth plastic container with 90 gram portions of Microthene FN Series polyethylene powder, available from USI Chemicals, having an average particle size between 8 and 30 microns to provide a 7 weight percent mixture of the polyethylene based on the total weight of the mixture. The carbon/polyethylene mixture was gently blended for 5 minutes in a roller mill to obtain a uniform mixture. Approximately 100 gram portions of the mixture were transferred to cylindrical aluminum molds, each having a height of 5 cm and a diameter of 10 cm, the top and bottom portions of the mold being formed from circular plates fitting within the cylinders. The filled molds were transferred to a convection oven and heated for periods of one-half to 1 hour until the final temperature corresponding to the solid-liquid transition stage was reached. The samples were removed from the oven and pressure was applied immediately by means of an hydraulic press. Thereafter, the cooled mixture of carbon and thermoplastic powder was removed from each of the molds and found to be self-supporting.

| Example | Polyethylene: Microthene FN# | Final Temperature | Compressive Pressure |
|---------|------------------------------|-------------------|----------------------|
| 1 | 500 | 127° C | 0.021 bar |
| 2 | 510 | 135° C | 0.021 bar |
| 3 | 524 | 135° C | 0.021 bar |
| 4 | 532* | 116° C | 0.021 bar |
| 5 | 500 | 127° C | 0 bar |
| 6 | 500 | 127° C | 11.2 bar |
| 7 | 500 | 127° C | 28.0 bar |
| 8 | 500 | 127° C | 0.021 bar |

* ethylene-vinyl acetate copolymer

Microthene FN500 is a low density polyethylene. Microthene FN510 and FN524 each have higher densities and Vicat softening points than FN500. Microthene FN532 is a copolymer of ethylene and 9 percent, by weight, vinyl acetate and has a lower Vicat softening point than FN500.

The following tests were performed on the immobilized carbon structures formed in the above examples.

Cyclohexane Adsorption Test:

The cyclohexane adsorption test is designed to measure the weight of cyclohexane which an activated carbon sample exposed to a saturated cyclohexane atmosphere will absorb during a period of time. Measurements are recorded at 30 second intervals until a stable reading is attained. The results are expressed in terms of grams of cyclohexane adsorbed per gram of carbon. A control consisting of an approximately equal weight of activated carbon of the same type as that used in the self-supporting immobilized carbon structures was used in each of the tests described below.

The test was performed as follows:

A small section (on the order to 30 to 80 mg) was removed from each of the samples formed as described in the General Method and was weighed on the pan of a Cahn Electrobalance Model G and remained on the balance pan within the balance case during the test. The precise weight of the sample was then recorded. A small pyrex dish having a height of 3 cm and a diameter of 5 cm, containing cyclohexane was placed 3.7 cm below the sample pan. A timer was set and the weight of the sample in the pan was recorded at 30 second intervals.

## Cyclohexane Adsorption (gm cyclohexane/gm carbon)

| Example | After 2 Minutes | Equilibrium Value |
|---|---|---|
| Control | 0.23 | 0.37 |
| 1 | 0.24 | 0.40 |
| 2 | 0.23 | 0.35 |
| 3 | 0.23 | 0.38 |
| 4 | 0.23 | 0.37 |

As the above results indicate, the self-supporting structures of immobilized carbon formed according to the present invention demonstrate adsorptive properties substantially identical to those of untreated activated carbon used as the control.

## Compressive Strength Test:

An Instron Model 1130 was used to determine the compressive strength of samples of the self-supporting immobilized carbon structures of the present invention. The test apparatus measures the force required to cause compressive failure of a sample and records such force in N per $cm^2$. In using the device, cubes of sample material cut from the molded bodies described in the General Method and having dimensions 2.5 x 2.5 x 2.0 cm were placed between two flat parallel plates, which plates were positioned in the jaws of the instrument. Upon actuation, a drive mechanism in the instrument causes the plates to move toward one another at a fixed rate until compressive failure of the sample occurs. The value at which failure occurs is then recorded as the compressive strength of the sample.

| Example | Compressive Strength ($N/cm^2$) | |
|---------|------------------|-----------|
| Control | 0 | |
| 5 | 6.3 | ( 9 psi) |
| 6 | 28.7 | ( 41 psi) |
| 7 | 72.1 | (103 psi) |

Dust Release Test:

The Dust Release Test is designed to measure the amount of carbon particles lost from a sample when subjected to a constant vibration.

The apparatus used to perform the test consists of three cylinders placed with their openings in series and secured to one another by a clamp. Rubber gaskets are used to separate each of the cylinders. In the first cylinder, a high efficiency Emflon® air filter manufactured by Pall Corporation is included and in the third or last cylinder a nylon 66 collection membrane having a 0.8 μm absolute pore rating is located. In the intermediate or second cylinder is placed the sample being tested, cut from a section of the structure formed according to the General Method. A 75 microns screen separates the second and third cylinders so that only fine particles are transferred between cylinders. The cylinders are secured to a vibrating dental table which is adjusted to provide a vibrating force of 4 G. Additionally, a vacuum for drawing air through the cylinders at a specified flow rate from the high efficiency air filter cylinder in the direction of collection is provided.

The test was performed by placing a sample of the self-supporting immobilized carbon structure of the present invention weighing about 30 grams in the second or sample cylinder.

The nylon 66 membrane was weighed and mounted in the collection cylinder. The cylinders were then clamped together and secured to the table. Vibration and air flow through the apparatus were initiated simultaneously, the air flow rate being adjusted to 8 liters per minute.

The test was conducted for 60 minutes, after which the collection membrane was removed and reweighed, the difference being the amount of carbon lost by the sample.

| Example | Carbon Loss |
|---|---|
| Control | 7 mg |
| 8 | less than 0.001 mg |

As the above results indicate, loose carbon particles (as, for example, the control test) contain or release large amounts of dust or fines. However, carbon particles retained in immobilized form as in Example 8 release a substantially lower or immeasurable quantity of carbon fines or dust.

0159696

Industrial Applicability:

The immobilized carbon structures of the present invention may be used in filters for filtering fluids, either gases or liquids, of various types. The immobilized carbon structures are particularly suited to filters employed in gas masks.

Claims:

1. A process for immobilizing adsorbent carbon particles and forming a self-supporting structure of high compressive strength therefrom, thereby substantially eliminating the formation of carbon fines while retaining the adsorption characteristics of said carbon particles, comprising the steps of:

(a) mixing carbon particles, a major portion of which has particle sizes in the range of from about 200 to about 2,000 microns, with a powdered thermoplastic material in an amount of about 5 to about 20 percent by weight, based on the weight of the total mixture, a major portion of the particles of said thermoplastic material having particle sizes in the range of about 8 to about 20 microns, to form a mixture of said carbon particles partially coated with said thermoplastic material;

(b) placing said mixture in a container of the desired shape; and

(c) applying a pressure of up to about 28 bar while the mixture is at a temperature corresponding to the solid-liquid transition stage of the thermoplastic material, thereby forming said structure and immobilizing said particles.

2. The process of claim 1 wherein said temperature is 30 to 50 degrees Celsius above the Vicat

0159696

softening point of said thermoplastic material.

3.    The process of claim 1 wherein the percentage by weight of said powdered thermoplastic material is 7 percent based on the weight of the total mixture.

4.    The process of claim 1 wherein a major portion of the particles of said thermoplastic material has particle sizes in the range of about 15 to about 20 microns.

5.    The process of claim 1 wherein the pressure applied to said mixture is about 0.021 to about 0.70 bar.

6.    The process of claim 1 wherein the thermoplastic material comprises a polyolefin.

7.    The process of claim 6 wherein the polyolefin comprises polyethylene.

8.    The process of claim 1 wherein the thermoplastic material comprises a copolymer of polyolefin and a second ethylenically unsaturated substance.

9.    The process of claim 1 wherein said adsorbent carbon particles comprise activated carbon particles.

10.    The process of claim 1, wherein said thermoplastic material is polyethylene, a major portion of which has particle sizes in the range of about 15 to about 20 microns and is present in an amount of about 7 percent by weight, based on the weight of said carbon particles, and a pressure of up to about 28 bar is applied to said mixture while at a temperature of about 30 to about 50 degrees C above the Vicat softening point of the thermoplastic material.

11. The process of claim 1, wherein said adsorbent carbon particles are impregnated with a metal compound prior to mixing with said thermoplastic material.

12. A process for immobilizing adsorbent carbon particles and forming a self-supporting structure of high compressive strength therefrom, thereby substantially eliminating the formation of carbon fines while retaining the adsorption characteristics of said carbon particles, comprising the steps of:

(a) mixing carbon particles, a major portion of which has particle sizes in the range of from about 200 to about 2,000 microns, with a powdered polymeric binding material in an amount of about 5 to about 20 percent by weight, based on the weight of the total mixture, a major portion of the particles of said polymeric binding material having particle sizes in the range of about 8 to about 20 microns, to form a mixture of said carbon particles partially coated with said polymeric binding material;

(b) placing said mixture in a container of the desired shape; and

(c) applying a pressure of up to about 28 bar while the mixture is at an elevated temperature, thereby forming said structure and immobilizing said particles.

13. A self-supporting, immobilized carbon structure substantially free of mobile carbon fines having a low pressure drop and high adsorptive capacity comprising:

adsorbent carbon particles, a major portion of which has particle sizes in the range of from about 200 to about 2,000 microns;

about 0.5 to about 5 percent by weight, based on the weight of adsorbent carbon particles, of immobilized carbon fines; and

about 5 to about 20 percent by weight of a thermoplastic material, the percentage of said thermoplastic material based on the total weight of the mixture of thermoplastic material, carbon particles and carbon fines.

14. The self-supporting structure according to claim 13 wherein the particle sizes of said carbon fines is in the range of about 0.1 to about 50 microns.

15. The self-supporting structure according to claim 13 wherein the percentage by weight of said powdered thermoplastic material is 7 percent.

16. The self-supporting structure according to claim 13 wherein the thermoplastic material comprises a polyolefin.

17. The self-supporting structure according to claim 16 wherein the polyolefin comprises polyethylene.

18. The self-supporting structure according to claim 13 wherein the thermoplastic material comprises a copolymer of polyolefin and a second ethylenically unsaturated substance.

19. The self-supporting structure according to claim 13 wherein said adsorbent carbon particles are impregnated with a metal compound.

20. A self-supporting, immobilized carbon structure substantially free of mobile carbon fines having a low pressure drop and high adsorptive capacity comprising:

adsorbent carbon particles, a major portion of which has particle sizes in the range of from about 200 to about 2,000 microns;

about 0.5 to about 5 percent by weight, based on the weight of adsorbent carbon particles, of immobilized carbon fines; and

about 5 to about 20 percent by weight of a polymeric binding material, the percentage of said polymeric binding material based on the total weight of the mixture of polymeric binding material, carbon particles and carbon fines.